# EUROPÄISCHE PATENTSCHRIFT

(11) **EP 1 844 221 B1**
(45) Veröffentlichungstag und Bekanntmachung des Hinweises auf die Patenterteilung: **10.11.2010**
(21) Anmeldenummer: 05818990.3
(22) Anmeldetag: 13.12.2005
(51) Int. Cl.: F02B 37/013, F02B 37/10, F02B 39/04, F02B 41/10

(54) **TURBOCOMPOUND-AUFLADESYSTEM MIT ZUSCHALTBAREM VERDICHTER**
TURBOCOMPOUND-CHARGING SYSTEM COMPRISING A SWITCHABLE COMPRESSOR
SYSTEME DE CHARGEMENT A TURBOCOMPOUND, A COMPRESSEUR RACCORDABLE

(30) Priorität: 26.01.2005 DE 102005003714
(43) Veröffentlichungstag der Anmeldung: 17.10.2007
(73) Patentinhaber: ROBERT BOSCH GMBH, 70442 Stuttgart (DE)
(72) Erfinder: WEYER, Klaus, 71638 Ludwigsburg (DE); DÜRNHOLZ, Manfred, 71720 Oberstenfeld (DE); WIRBELEIT, Friedrich, 73733 Esslingen (DE); HIERETH, Hermann, 73732 Esslingen (DE)
(86) Internationale Anmeldenummer: PCT/EP2005/056714
(87) Internationale Veröffentlichungsnummer: WO 2006/079433

(56) Entgegenhaltungen:
- EP-A- 0 417 732
- WO-A-97/41338
- CH-A- 314 435
- DE-C- 398 902
- US-A- 5 033 269
- US-A1- 2003 159 441
- PATENT ABSTRACTS OF JAPAN Bd. 1997, Nr. 09, 30. September 1997 (1997-09-30) & JP 09 137732 A (MITSUBISHI MOTORS CORP), 27. Mai 1997 (1997-05-27)

## Beschreibung

### Technisches Gebiet

An Verbrennungskraftmaschinen werden Aufladeeinrichtungen wie z.B. Abgasturbolader eingesetzt, um auf der Turbinenseite die - infolge des begrenzten Expansionshubes - im Motor selbst nicht mehr verwertbare Abgasenergie zu nutzen und damit auf der Verdichterseite die angesaugte Verbrennungsluft zu verdichten. Auf diese Weise kann bei vorgegebenem Motorhubvolumen mehr Luftmasse in die Brennräume der Verbrennungskraftmaschine gefördert werden, damit mehr Kraftstoff eingespritzt werden kann und sich auf diese Weise eine höhere Motorleistung erzielen lässt. Es gibt verschiedene Ausführungsvarianten von Abgas-Turbo-Aufladesystemen, so seien die Festgeometrielader erwähnt sowie Aufladesysteme mit kleineren Turbinen mit Waste-Gate-Regelung (WG) für verbessertes Ansprechverhalten sowie Turbolader, die mit einer variablen Turbinengeometrie (VTG) ausgestattet sind. Waste-Gate-Regelung und variable Turbinengeometrie tragen vor allem zur Wirkungsgrad- und Dynamikverbesserung bei.

### Stand der Technik

Aus DE 195 14 572 A1 ist eine aufgeladene Brennkraftmaschine bekannt. Die aufgeladene Brennkraftmaschine umfasst eine Hochdruckstufe und eine im Verhältnis zur Hochdruckstufe größere Niederdruckstufe, bei der mittels einer Umschaltvorrichtung im unteren Drehzahlbereich der Brennkraftmaschine Hoch- und Niederdruckstufe in Reihe geschaltet sind und bei Erhöhung der Drehzahl der Brennkraftmaschine das Abgas durch Umschalten der Umschaltvorrichtung zum größten Teil an einer Hochdruckturbine vorbeigeführt und direkt in eine Niederdruckturbine eingeleitet wird. Die Niederdruckturbine ist zweiflutig ausgebildet, wobei die Umschaltvorrichtung 13 im zweistufigen Betrieb den Ausgang der Hochdruckturbine über Abgasleitungen mit beiden Fluten der Niederdruckturbine verbindet und dass nach Drehung einer Klappe der Umschaltvorrichtung die Hochdruckturbine umfahren und getrennte Abgasstränge der Brennkraftmaschine direkt mittels der Abgasleitungen mit den beiden Fluten der Niederdruckturbine verbunden werden. Es ist ein Abblasventil vorgesehen, welches in eine Bypassleitung eingeschaltet ist, welche den Abgasstrang mit einem Anschlussstutzen der Umschaltvorrichtung verbindet und dass das Abblasventil bei einem gleitenden Übergang von zwei- zu einstufigem Betrieb geöffnet wird, damit im Übergangsbereich zwischen unterer und mittlerer Drehzahl der Brennkraftmaschine partiell Abgas aus dem Abgasstrang direkt der Niederdruckturbine zugeführt werden kann. Der Hochdruckverdichter ist bei einstufiger Betriebsweise durch eine parallel geschaltete Ladeluftleitung umgehbar, so dass lediglich eine kleine Kühlluftmenge durch den Hochdruckverdichter strömt. Dieses System besteht im Prinzip aus zwei hintereinander geschalteten Abgasturboladern, den Hochdruck- und den Niederdruckabgasturbolader. Durch die zweistufige Aufladung kann die zugeführte Luftmasse deutlich erhöht werden und so die Emissionen und/oder die abgegebene Motorleistung verbessert werden. Die zweistufige Aufladung findet im Großmotorenbau z.B. bei Schiffsantrieben oder Kraflwerken Anwendung. Darüber hinaus sind mechanische Aufladesysteme bekannt, bei denen der Verdichter über ein Getriebe direkt von der Verbrennungskraftmaschine angetrieben wird. Die für den Verdichter erforderliche Antriebsleistung wird nicht aus der Abgasenergie gewonnen, sondern direkt an der Verbrennungskraftmaschine zur Verfügung gestellt. Ein solches mechanische Aufladesysteme ist zum Beispiel aus US 2003/015 9441 A bekannt.

Vorzugsweise bei NKW-Motoren befinden sich zwischenzeitlich auch Turbocompound-Systeme im Einsatz. Bei diesen Systemen wird die Nutzleistung der Verbrennungskraftmaschine nicht durch den Arbeitszylinder erzeugt, sondern auch mit einer einer Aufladeeinrichtung wie z.B. einem Abgasturbolader nachgeschalteten Expansionsstufe. Diese zusätzlich erzeugte Leistung wird über eine Reduktionsgetriebe, einen Freilauf und eine Dämpfungskupplung oder alternativ einem hydraulischen Wandler an die Kurbelwelle der Verbrennungskraftmaschinen zurückgeführt. Dieses System wird bei Nutzfahrzeugen eingesetzt, um die nach dem Antrieb des Turboladers im Abgas verbliebene Energie weiter zu nutzen und den Kraftstoffverbrauch somit weiter abzusenken. Ein solches system ist aus WO 97 413 38 A oder WO 92/02719 A bekannt.

Die oben erwähnten Aufladeeinrichtungen für Verbrennungskraftmaschinen weisen allerdings bestimmte Probleme auf. So kann ein Ladedruckanstieg nur durch Erhöhung der Laderdrehzahl erreicht werden, wozu einmal genügend Abgasenergie vorhanden sein muss und diese noch dazu ausreichen muss, zusätzlich das Trägheitsmoment des Laders bei dessen Beschleunigung auf höhere Drehzahlen zu überwinden. Der Dynamik eines solchen Systems sind damit Grenzen gesetzt.

Das erwähnte Turbocompound-System wird zur bestmögliche Nutzung der Abgasenergie eingesetzt, kann aber nur bei höheren Lasten und Drehzahlen der Verbrennungskraftmaschine in zufrieden stellender Weise Energie an die Kurbelwelle der Verbrennungskraftmaschine zurückspeisen.

Bei Abgasrückführapplikationen und bisher standardmäßig eingesetzten Aufladesystemen kommt es zu Leistungseinbußen. Eine Emissionsanpassung mit hohen Abgasrückführraten ist bei heute eingesetzten Aufladesystemen nur unter Inkaufnahme eines Rückgangs der Nennleistung möglich, da ein die Euro-4-NKW-Applikation erfüllendes Aufladesystem auch bei Volllast der Verbrennungskraftmaschine hohe Abgasrückführraten benötigt. Bei konventionellen Aufladesystemen liegen zur Einhaltung der NOX-Emissionen die Rußemissionen jedoch über dem Grenzwert und machen somit den Einsatz eines Abgasnachbehandlungssystems z.B. in Gestalt eines Dieselpartikelfilters nötig.

### Darstellung der Erfindung

Der erfindungsgemäß vorgeschlagenen Lösung folgend wird die Kombination eines Turbocompound-Systems und mit einem schaltbaren Zusatzströmungsverdichter, der auf gleicher Welle mit der Nutzturbine angeordnet ist, vorgeschlagen. Neben einem im Abgastrakt einer Verbrennungskraftmaschine angeordneten Abgasturbolader sind der Verbrennungskraftmaschine somit auf der Frischluftseite ein zuschaltbarer Verdichter sowie auf der Abgasseite den bereits vorhandenen Abgasturbolader eine Nutzturbine nachgeschaltet. Die beschriebene Kombination weist damit folgende Eigenschaften auf: Durch die Kopplung des Zusatzverdichters mit der Kurbelwelle der Verbrennungskraftmaschine wird Ladedruck unabhängig von der Verfügbarkeit von Abgasenergie erzeugt, was zu deutlichen Drehmomenterhöhungen bei niedrigen Motordrehzahlen führt und damit das Anfahrverhalten, welches sich mit der beschriebenen Kombination erreichen lässt, erheblich verbessert. Infolge der erhöhten Motorleistung im Niedrigdrehzahlbereich der Verbrennungskraftmaschine setzt auch der Abgasturbolader sehr früh ein und bildet dann zusammen mit dem Zusatzverdichter ein zweistufiges Aufladesystem mit hohen erreichbaren Luftüberschusszahlen, wodurch die Einhaltung der Emissionsgrenzwerte erleichtert wird. Neben dem durch die Abgasenergie der Verbrennungskraftmaschine angetriebenen Abgasturbolader kann durch die zweistufige Aufladung, d.h. den Antrieb des zusätzlichen Verdichters über die Nutzturbine eine Einhaltung der Euro-5-Norm-Grenzwerte für Nutzkraftfahrzeuge ohne Leistungseinbußen sichergestellt werden trotz der sich ergebenden hohen Abgasrückführraten.

Das der Verbrennungskraftmaschine zugeordnete Turbocompound-System umfasst einen Luftfilter, über welchen Frischluft aus der Umgebung angesaugt wird. Die angesaugte Frischluft wird über den Verdichterteil des Abgasturboladers und anschließend - nach Passage des Ladeluftkühlers - der Verbrennungskraftmaschine zugeführt. Das Abgas der Verbrennungskraftmaschine verlässt diese über den Abgaskrümmer und treibt den Turbinenteil des Abgasturboladers an. Das Turbocompound-System umfasst darüber hinaus eine zweite Nutzturbine, welche die dem Abgas innewohnende Restenergie über ein ein- oder mehrstufig ausgestaltetes Reduktionsgetriebe, eine Dämpfungskupplung und einen (im Falle der Energieeinspeisung) geschlossenen Freilauf direkt auf die Kurbelwelle der Verbrennungskraftmaschine überträgt.

Kennzeichnend für die vorgeschlagene Lösung ist eine parallele Luftströmungen ermöglichende Luftstrecke, die sich vom Luftfilter aus in Richtung des zusätzlichen zuschaltbaren Verdichters erstreckt und über die eine Zusatzluftmenge gefördert werden kann. Der zuschaltbare Verdichter arbeitet über eine mechanisch, elektrisch oder hydraulisch ausgebildete, regelbare Kupplung auf die gleiche Welle, die der zusätzlichen zweiten Nutzturbine des Turbocompound zugeordnet ist und ergibt dadurch - bei geschlossener Kupplung - einen zweiten Abgasturbolader, d.h. dadurch wird eine zweistufige Aufladung der Verbrennungskraftmaschine realisiert. Der zusätzliche zweite Verdichter kann nun einerseits direkt von der Verbrennungskraftmaschine angetrieben werden. Dazu wird von der Verbrennungskraftmaschine über das Reduktionsgetriebe und den in diesem Falle gesperrten Freilauf der zuschaltbare zusätzliche Verdichter angetrieben. Um eine schlagartige Beschleunigung des zuschaltbaren zusätzlichen Verdichters, welche zu Schäden am Reduktionsgetriebe oder am Verdichter führen würde, auszuschließen, wird eine zusätzlich Kupplung eingesetzt, die bevorzugt regelbar ausgebildet ist. Diese regelbare Kupplung wird auf der Welle zwischen dem zusätzlichen Verdichter und der Nutzturbine angeordnet. In Fällen schneller Laständerungen wird der zusätzliche Verdichter in Abhängigkeit vom Luftbedarf hochgefahren und erhöht die Frischluftzufuhr in den Brennraum der Verbrennungskraftmaschine. Als Beispiele für Fälle schneller Laständerungen wäre einerseits das Anfahren zu nennen, da insbesondere bei NKW hohe Anfahrmomente realisiert werden müssen bei möglichst niedriger Motordrehzahl, um den Verlustwärmeeintrag in die Kupplung zu minimieren. Ein weiterer Unterfall einer schnellen Laständerung liegt z.B. nach dem Start der Verbrennungskraftmaschine und dem nachfolgenden Durchfahren der einzelnen Gangstufen oder in schwerem Gelände mit starken Laständerungen vor. Um dies zu realisieren, ist ein Rückschlagventil notwendig, welches ein Entweichen vorverdichteter Frischluft über den Luftfilter verhindert.

Eine weitere Steigerung des Ansprechverhaltens sowie die Wirkungsgrades der vorgeschlagenen Lösung kann dadurch erreicht werden, wenn mittels eines Freilaufs oder einer schaltbaren Kupplung im Beschleunigungsfall der Verbrennungskraftmaschine die Nutzturbine abgetrennt werden kann und deren Masse nicht mit beschleunigt werden muss.

Das Turbocompound-System an sich bietet die Möglichkeit, dass die Abtriebsleistung der Nutzturbine sowohl der Kurbelwelle der Verbrennungskraftmaschine zugeführt werden kann, als auch zur Vorverdichtung von Frischluft eingesetzt werden kann. Die oben erwähnte zweistufige Aufladung, welche über eine direkte Verbindung von Nutzturbine und zusätzlichem Verdichter gemäß der vorgeschlagenen Lösung realisiert werden kann, lassen sich einerseits die geforderten Euro-5-Emissionsgrenzwerte für Nutzkraftfahrzeuge ohne Abgasnachbehandlungssystem und ohne signifikante Leistungseinbußen erreichen. Bei niedrigen Lasten und hohen Drehzahlen ist jedoch ein konventionelles einstufiges Aufladekonzept durchaus ausreichend. Dies kann gemäß der vorgeschlagenen Lösung dadurch erreicht werden, dass die Kupplung zwischen dem zusätzlichen Verdichter und der Nutzturbine geöffnet wird. Ist ein rein zweistufiger Aufladebetrieb gewünscht, kann über den Freilauf eine Abkopplung der Nutzturbine durch Unterbrechung der Verbindung zwischen der Nutzturbine und dem Reduktionsgetriebe oder der Verbrennungskraftmaschine selbst erfolgen. Wird die Kupplung zwischen dem zusätzlichen Verdichter und der Nutzturbine hydraulisch befüll- und entleerbare Kupplung ausgebildet, lässt sich die Drehzahl des zusätzlichen Verdichters beliebig steuern. Dies bietet Vorteile dahingehend, sowohl im Bremsbetrieb der Verbrennungskraftmaschine die Motorbremsleistung als auch im Motorbetrieb den Aufladegrad bzw. das Luftverhältnis zu regeln. Im Bremsbetrieb der Verbrennungskraftmaschine wird der zusätzliche Verdichter direkt von der Verbrennungskraftmaschine angetrieben und liefert dadurch mehr Luft in die Brennräume der Verbrennungskraftmaschine und begünstigt somit die Kühlung der Bauteile sowie eine Verbesserung der Bremswirkung. Bei Motorbremssystemen wird im Bremsbetrieb üblicherweise die Luft von der Verbrennungskraftmaschine angesaugt und im Kompressionstakt derselben verdichtet. Nachdem die Verdichtungsarbeit geleistet wird, wird die komprimierte Luft über ein spezielles Ventil abgeblasen, was bedeutet, dass die zuvor geleistete Kompressionsarbeit bei der anschließenden Expansion nicht im Sinne einer "Gasfeder" zurückgewonnen werden kann.

### Zeichnung

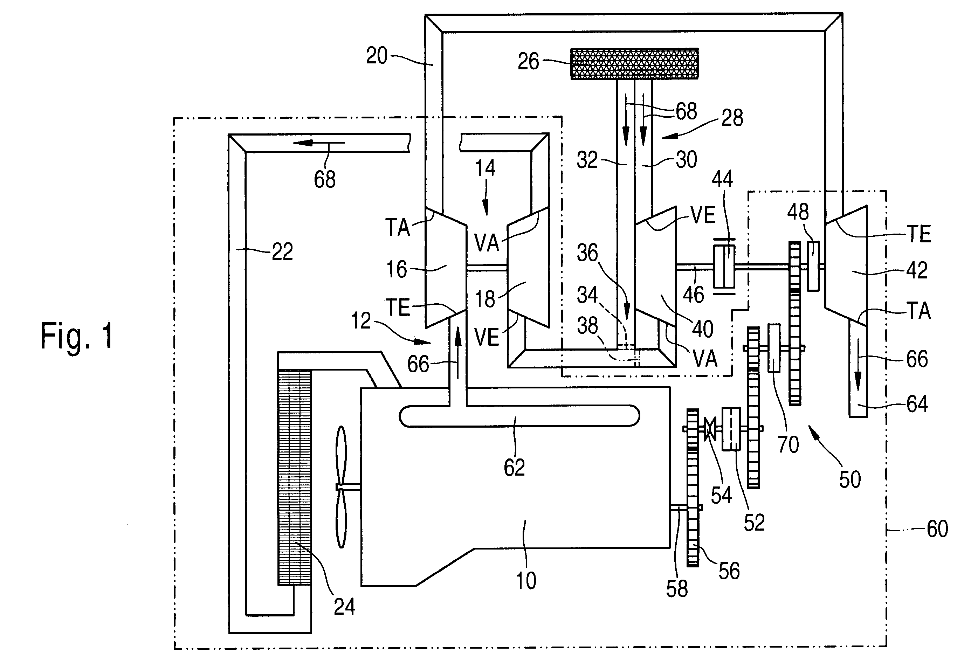

Anhand der Zeichnung wird die Erfindung nachstehend eingehender beschrieben.

Die einzige Figur zeigt eine Verbrennungskraftmaschine mit Turbocompound-System, wobei das Turbocompound-System eine Nutzturbine enthält, die mit einem über eine Kupplung zu- bzw. abschaltbarem zusätzlichen Verdichter gekoppelt ist, wobei diesem Verdichter eine zweiflutige Ansaugluftstrecke zugeordnet ist.

### Ausführungsvarianten

Der einzigen Figur ist eine Verbrennungskraftmaschine 10 zu entnehmen, der ein Turbocompound-System 60 zugeordnet ist. Das Turbocompound-System 60 umfasst einen Abgasturbolader 14, der im Abgastrakt 12 der Verbrennungskraftmaschine 10 aufgenommen ist. Der Abgasturbolader 14 wiederum umfasst einen Turbinenteil 16 sowie einen Verdichterteil 18. Der Turbinenteil 16 des Abgasturboladers 14 wird durch Abgas 66 beaufschlagt, welches in einer Abgasleitung 20 der Verbrennungskraftmaschine 10 im Abgastrakt 12 strömt. Das Turbocompound-System 60 umfasst darüber hinaus einen Ladeluftkühler 24, der in einer sich vom Verdichterteil 18 des Abgasturboladers 14 aus erstreckenden Ansaugluftleitung 22 aufgenommen ist und die vorverdichtete Ansaugluft abkühlt, bevor diese der Verbrennungskraftmaschine 10 zugeführt wird. Schließlich umfasst das Turbocompound-System 60 eine Nutzturbine 42, die über ein Reduktionsgetriebe 50 mittels einer Dämpfungskupplung 52 und einem Freilauf 54 mit der Kurbelwelle 58 der Verbrennungskraftmaschine 10 kuppelbar und von dieser auch wieder entkuppelbar ist.

Die beim Turbocompound-System 60 vorgesehene Nutzturbine 42 schließt sich in Strömungsrichtung des Abgases 66 nach Passage des Turbineneintritts TE des Turbinenteils 16 und nach Passage des Turbinenaustritts TA des Turbinenteils 16 an die Abgasleitung 20 an. Der Einlass der Nutzturbine 52 ist durch TE gekennzeichnet, der Auslass der Nutzturbine 42 durch TA. An den Turbinenauslass TA der Nutzturbine 42 schließt sich eine nicht näher dargestellte Leitung 64 zum Abgasschalldämpfer an.

Die beim Turbocompound-System 60 vorgesehene Nutzturbine 42 wird gemäß dem diesem System zugrunde liegenden Gedankens dazu eingesetzt, die im Abgas 66 nach Passage des Turbinenteils 16 des Abgasturboladers 14 verbliebene, d.h. bisher nicht ausgenutzte Restenergie zu nutzen. Dies erfolgt in der Regel dadurch, dass die Nutzturbine 42 über das Getriebe 50, welches im Regelfall als Reduktionsgetriebe ausgebildet ist, die Dämpfungskupplung 52 sowie einen im Falle der Energiezufuhr zur Verbrennungskraftmaschine 10 geschlossenen Freilauf 54 auf die Kurbelwelle 52 der Verbrennungskraftmaschine 10 wirkt. Somit wird ein zusätzliches Drehmoment auf die Kurbelwelle 52 der Verbrennungskraftmaschine 10 übertragen.

Die erfindungsgemäß vorgeschlagene Kombination eines Turbocompound-Systems 60 mit einem weiteren, zusätzlichen Verdichter 40 ermöglicht es in vorteilhafter Weise aus einem mehrflutig ausgestalteten Ansaugrohr 28 über einen Luftfilter 36 eine Zusatzluftmenge zur Verbrennungskraftmaschine 10 zu fördern. Das mehrflutige Ansaugrohr 28 umfasst eine erste Luftstrecke 30 und eine weitere zweite Luftstrecke 32, an deren Mündungsstelle in die Ansaugluftleitung 22 ein Rückschlagventil 34 eingelassen ist. Das Rückschlagventil 34 kann beispielsweise klappenförmig ausgebildet sein und ist zwischen einer ersten Stellung 36 und einer zweiten Stellung 38 in der Ansaugluftleitung 22 verstellbar.

Die im mehrflutigen Ansaugrohr 28 über den Luftfilter 26 angesaugte Ansaugluft ist durch Bezugszeichen 68 kenntlich gemacht. Zwischen dem zusätzlichen, zuschaltbaren Verdichter 40 und der Nutzturbine 42 sind auf einer sich zwischen diesen Komponenten erstreckenden Antriebswelle 46 eine regelbare Kupplung 44 sowie eine Kupplung 48 mit Freilauf aufgenommen. Die Kupplung 48 mit Freilauf ist auf der Antriebswelle 46 zwischen der Nutzturbine 42 und der Drehmomentabgriffsstelle des Reduktionsgetriebes 50 angeordnet, während die regelbar ausgestaltete Kupplung 44 sich zwischen der Drehmomentabgriffsstelle des Reduktionsgetriebes 50 und dem zusätzlichen, zuschaltbaren Verdichter 40 befindet. Die regelbare Kupplung 44 kann entweder hydraulisch oder elektrisch oder auch mechanisch ausgebildet sein. Auch eine Kombination dieser Ausführungsarten miteinander ist möglich.

Das Getriebe 50, welches bevorzugt als Reduktionsgetriebe ausgestaltet ist, umfasst eine Dämpfungskupplung 52 zur Dämpfung von Drehmomentstößen sowie einen Freilauf 54, der zwischen das Reduktionsgetriebe 50 und ein Schwungrad 56, welches auf der Kurbelwelle 58 der Verbrennungskraflsnaschine 10 angeordnet ist, integriert ist. Der Vollständigkeit halber sei erwähnt, dass das Abgas 66 der Abgasleitung 20 über einen Abgaskrümmer 62 der Verbrennungskraftmaschine 10 zugeführt wird. Ferner ist eine Kupplung 70 in das Getriebe 50 integriert, welches insbesondere als Reduktionsgetriebe ausgebildet ist. Die Kupplung 70 erlaubt bei geschlossener regelbarer Kupplung 44 einen trägheitsmomentanen zweistufigen Abgasturboladerbetrieb des Abgasturboladers 14 sowie des weiteren Abgasturboladers, der durch die miteinander gekoppelten Komponenten Nutzturbine 42 sowie zusätzlicher zuschaltbarer Verdichter 40 gebildet wird.

Mit der erfindungsgemäß vorgeschlagenen Kombination des der Verbrennungskraftmaschine 10 zugeordneten Turbocompound-Systems 60 und des zuschaltbaren weiteren Verdichters 40 lassen sich fahrsituationsabhängig verschiedene Betriebsmodi der Verbrennungskraftmaschine 10 realisieren:
Es besteht nunmehr die Möglichkeit, zur Verbesserung der Dynamik der Verbrennungskraftmaschine 10 den zusätzlichen Verdichter 40 direkt über die Verbrennungskraftmaschine 10 anzutreiben. Dazu wird das Schwungrad 56 auf der Kurbelwelle 58 über den in diesem Falle gesperrten Freilauf 54 und die geschlossene Dämpfungskupplung 52 mit dem Reduktionsgetriebe 50 verbunden, welches seinerseits die Antriebswelle 46 des zuschaltbaren Verdichters 40 antreibt. In diesem Betriebsmodus ist die regelbare Kupplung 44 geschlossen, so dass über die Antriebswelle 46 der zuschaltbare Verdichter 40 hochgefahren werden kann. Mittels der regelbar ausgestalteten Kupplung 44 kann zudem eine schlagartige Beschleunigung des zusätzlichen, zuschaltbaren Verdichters 40 vermieden werden, was zu Schäden am Getriebe 50 oder am zusätzlichen, zuschaltbaren Verdichter 40 führen würde. Alternativ ist es auch denkbar, die Dämpfungskupplung 52 sowie den im vorstehend erläuterten Betriebsmodus gesperrten Freilauf 54 regelbar auszuführen oder durch eine schaltbare Kupplung zu ersetzen. Im Falle des Einsatzes einer schaltbaren Kupplung kann die Dämpfungskupplung 52 stets befüllt bleiben, was sich als sehr günstig wegen der Füll- und Entleerungszeiten einer solchen Kupplung herausgestellt hat.

In diesem Betriebsmodus wird der zuschaltbare zusätzliche Verdichter 40 in Abhängigkeit von Luftbedarf der Verbrennungskraftmaschine 10 hochgefahren und erhöht die Frischluftzufuhr in die Brennräume der Verbrennungskraftmaschine 10. In diesem Falle befindet sich das klappenförmig ausbildbare Rückschlagventil 34 in seiner ersten Stellung 36, so dass verhindert wird, dass die vom zusätzlichen zuschaltbaren Verdichter 40 vorverdichtete Frischluft im Kurzschluss durch die zweite Luftstrecke 38 des mehrflutigen Ansaugrohrs 28 am Luftfilter 26 wieder entweicht. Eine weitere Steigerung des dynamischen Ansprechverhaltens sowie des Wirkungsgrades kann dadurch erzielt werden, dass im Beschleunigungsfalle der Verbrennungskraftmaschine mittels der Kupplung 48 mit Freilauf die Nutzturbine 42 von der Antriebswelle 46 abgetrennt werden kann und diese daher nicht mit beschleunigt werden muss. Die über das Getriebe 50 vom Schwungrad 56 der Kurbelwelle 58 an den zusätzlichen zuschaltbaren Verdichter 40 übertragene Energie steht somit zur Förderung einer zusätzlichen Luftmenge durch die Ansaugluftleitung 22 zum Verdichterteil 18 des Abgasturboladers 14 und von dort zum Ladeluftkühler 24 in die Verbrennungskraftmaschine 10 zur Verfügung.

Im Hinblick auf den oben stehend skizzierten Betriebsmodus kann bei Fahrmanövern, wie z.B. schwierigen Anfahrbedingungen an einer Steigung, beim Bremsen mittels der Motorbremse eine Verbesserung der Fahrdynamik erzielt werden. Durch den oben stehend skizzierten Betriebsmodus der Verbrennungskraftmaschine 10 können auch bei schnellen und dynamisch erfolgenden Lastwechseln die Emissionsgrenzwerte eingehalten werden, da in diesem Betriebsmodus eine Zusatzluftmenge zur Verbrennungskraftmaschine gefördert wird.

In einem weiteren Betriebsmodus lässt sich durch die erfindungsgemäß vorgeschlagene Kombination eines Turbocompound-Systems 60 mit einem weiteren, zuschaltbaren Verdichter 40 ein zweiter Abgasturbolader realisieren. In diesem Betriebsmodus ist der zuschaltbare, weitere Verdichter 40 über die Antriebswelle 46 bei geschlossener Kupplung 44 und geschlossener Kupplung 48 mit Freilauf direkt mit der Nutzturbine 42 verbunden. In diesem Betriebsmodus ist die Dämpfungskupplung 52 zwischen dem Getriebe 50 und dem Schwungrad 46 der Verbrennungskraftmaschine 10 geöffnet, d.h. dieser Verbindungsstrang ist unterbrochen. Ist in diesem Betriebsmodus der der Kupplung 48 zugeordnete Freilauf durch eine schaltbare Kupplung ersetzt, kann die Dämpfungskupplung 52 gefüllt bleiben, was - wie oben bereits angeklungen - günstig wegen der erforderlichen Füll- bzw. Entleerungszeiten ist.

In diesem Betriebsmodus ist dem ersten Abgasturbolader 14, einen Verdichterteil 18 und einen Turbinenteil 16 umfassend, ein zweiter Abgasturbolader nachgeschaltet, der die Komponenten zusätzlicher Verdichter 40 und Nutzturbine 42 umfasst, welche drehfest über die Antriebswelle 46, die geschlossene Kupplung 44 und die ebenfalls geschlossene Kupplung 48 mit Freilauf miteinander verbundenen sind.

Durch das Turbocompound-System 60 kann die Ausnutzung der dem Abgas 66 innewohnenden Restenergie nach Passage des Abgasturboladers 14 erreicht werden. Die erfindungsgemäß vorgeschlagene Kombination des Turbocompound-Systems 60 mit dem zusätzlichen, zuschaltbaren Verdichter 40 bietet darüber hinaus die Möglichkeit, die Abtriebsleistung der Nutzturbine 42 sowohl der Kurbelwelle 58 der Verbrennungskraftmaschine 10 im reinen Turbocompound-System-Betriebsmodus zuzuführen, als auch die angesaugte Frischluft vorzuverdichten und diese vorverdichtete Frischluft den Brennräumen der Verbrennungskraftmaschine 10 zuzuführen, wodurch sich eine Verbesserung des Wirkungsgrades und damit eine Absenkung des Kraftstoffverbrauchs erzielen lassen. Im Betriebsmodus zweistufige Aufladung, d.h. bei einer direkten Verbindung der Nutzturbine 42 mit dem zusätzlichen Verdichter 40 über die Antriebswelle 46 mit geschlossener regelbarer Kupplung 44 und geschlossener Kupplung 48 mit Freilauf lassen sich die geforderten Euro-5-NKW-Emissionsgrenzwerte ohne Einsatz eines zusätzlichen Abgasnachbehandlungssystems und ohne Leistungseinbußen der Verbrennungskraftmaschine erreichen. Bei niedrigen Lasten und hohen Drehzahlen der Verbrennungskraftmaschine bietet die erfmdungsgemäß vorgeschlagene Lösung den Vorteil, in diesem Betriebsmodus als konventionelles einstufiges Aufladekonzept betreibbar zu sein, was hinsichtlich des Kraftstoffverbrauchs Vorteile bringen kann. In diesem Falle wäre innerhalb des Turbocompound-Systems 60 der Abgasturbolader 14 aktiv, wohingegen die regelbare Kupplung 44 zwischen der Nutzturbine 42 und dem zusätzlichen, zuschaltbaren Verdichter 40 geöffnet wäre. In diesem Falle treibt die Nutzturbine 42 über das bei geschlossener Kupplung 48 mit Freilauf eingekoppelte Getriebe 50 das Schwungrad 46 der Kurbelwelle 58 der Verbrennungskraftmaschine 10 zusätzlich an. Im Falle des Betriebs der Verbrennungskraftmaschine 10 mit einer rein zweistufigen Aufladung kann das Getriebe 50 bei geschlossener regelbarer Kupplung 44 und geschlossener Kupplung 48 mit Freilauf über ein Öffnen des Freilaufs 54 von der Kurbelwelle 58 der Verbrennungskraftmaschine getrennt werden..

Die regelbare Kupplung 44, die insbesondere als eine hydraulisch befüllbare und hydraulisch entleerbare Kupplung ausgestaltet sein kann, bieten zudem den Vorteil, die Drehzahl des zuschaltbaren zusätzlichen Verdichters 40 beliebig zu steuern oder zu regeln. Damit lässt sich im Betriebsmodus Motorbremse sowohl die Motorbremsleistung als auch im Motorbetrieb der Verbrennungskraftmaschine 10 der Aufladegrad bzw. das Luftverhältnis λ beeinflussen. Im Betriebsmodus Motorbremse wird der zusätzliche zuschaltbare Verdichter 40 von der Verbrennungskraftmaschine 10 wie oben stehend erläutert angetrieben und liefert dadurch eine Zusatzluftmenge in die Brennräume der Verbrennungskraftmaschine. Damit lässt sich in vorteilhafter Weise eine Kühlung der Bauteile sowie eine Verbesserung der Bremswirkung erreichen. In Nutzkraftfahrzeugen bisher eingesetzte verschleißfreie Dauerbremsen lassen sich am einfachsten durch eine Motorbremse realisieren. Diese Motorbremse umfasst im einfachsten Falle im Auspuffbereich eine Drosselklappe, mit deren Hilfe eine Bremsleistung von ca. 30 % der Motor-Nennleistung erreicht werden kann. Soll diese Motorbremsleistung weiter erhöht werden, so muss zum einen verhindert werden, dass die im Brennraum verdichtete Luft einen Großteil der aufgewandten Verdichtungsenergie als "Gasfeder" speichert und in der Expansion an die Kurbelwelle zurückgibt. Lösungen dazu sind ein Konstantdrosselsystem, bei dem ein Zusatzventil im Zylinderkopfbereich der Verbrennungskraftmaschine im Motorbremsbetrieb geöffnet wird und so die Gasfederwirkung der angesaugten Luft in der Expansion verringert, allerdings auch infolge der Daueröffnung die aufzubringende und damit hinsichtlich des Motorbremssystems wirksame Verdichtungsenergie. Eine weitere Steigerung der Bremsleistung einer Verbrennungskraftmaschine ergibt sich dann, wenn der Luftdurchsatz durch die Verbrennungskraftmaschine im Bremsbetrieb gesteigert werden kann. Hierzu wurden bisher Leitringe eingesetzt. Ein Leitring wird im Motorbremsbetrieb vor dem Turbinenteil in das Turbinengehäuse eingeschoben, so dass der Zuströmquerschnitt am Turbinenteil TE stark verringert wird, damit sich die Turbinenleistung erhöht, woraus sich ein höherer "Bremsladedruck" ergibt. Durch den erhöhten Luftdurchsatz steigt auch die Innenkühlung des Brennraums mit der Folge niedrigerer Bauteiltemperaturen und damit abnehmender Bauteilbelastungen. Es bleibt jedoch nach wie vor eine Drosselklappe im Auspuff- in Strömungsrichtung des Abgases gesehen - hinter dem Turbinenteil erforderlich. Im Betriebsmodus Motorbremse erlaubt der zusätzlich zuschaltbare Verdichter 40, der von der Verbrennungskraftmaschine 10 gemäß den oben stehenden Erläuterungen angetrieben wird, die Förderung einer Zusatzluftmenge in die Brennräume der Verbrennungskraftmaschine. Damit lassen sich unter Verzicht auf das dargestellte Leitringsystem sowohl eine Kühlung der Bauteile sowie eine Verbesserung der Bremswirkung erreichen.

Der Einsatz der erfindungsgemäß vorgeschlagenen Verbrennungskraftmaschine 10 mit Turbocompound-System 60 und diesem zugeordneten zusätzlichen, zuschaltbaren Verdichter 40 eignet sich insbesondere für Applikationen im Nutzfahrzeugbereich. Die erfindungsgemäß vorgeschlagene Lösung erlaubt in vorteilhafter Weise eine Steigerung des Wirkungsgrades und eine Absenkung des Kraftstoffverbrauchs der Verbrennungskraftmaschine 10. Der Einsatz des erfindungsgemäß vorgeschlagenen Konzeptes erlaut zudem eine Einhaltung der strengen Euro-5-Grenzwerte für Nutzfahrzeuge unter Verzicht auf ein zusätzliches, kostenaufwendiges Abgasnachbehandlungssystem insbesondere an Nutzfahrzeugen. Im Bereich von Applikationen bei Nutzfahrzeugen birgt der Einsatz der m PKW-Bereich zunehmend eingesetzten Dieselpartikelfilter Nachteile, die vor allem darin liegen, dass die bisher zur Verfügung stehenden Dieselpartikelfilter eine zu kurze Standzeit aufweisen im Vergleich zur Lebensdauer des Nutzfahrzeugs und durch den mittels des Dieselpartikelfilters erzeugten Gegendrucks unweigerlich eine Anstieg des Kraftstoffverbrauchs zu erwarten steht.

### Bezueszeichenliste

- 10: Verbrennungskraftmaschine
- 12: Abgastrakt
- 14: Abgasturbolader
- 16: Abgasturbolader-Turbinenteil
- 18: Abgasturbolader-Verdichterteil
- 20: Abgasleitung
- 22: Ansaugluftleitung
- 24: Ladeluftkühler
- 26: Luftfilter
- 28: mehrflutiges Ansaugrohr
- 30: 1. Luftstrecke
- 32: 2. Luftstrecke
- 34: klappenförmiges Rückschlagventil
- 36: 1. Stellung Rückschlagventil
- 38: 2. Stellung Rückschlagventil
- 40: zuschaltbarer Verdichter
- 42: Nutzturbine
- 44: regelbare Kupplung
- 46: Antriebswelle zuschaltbarer Verdichter
- 48: Kupplung mit Freilauf
- 50: Getriebe (Reduktionsgetriebe)
- 52: Dämpfungskupplung
- 54: Freilauf
- 56: Schwungrad Kurbelwelle
- 58: Turbowelle
- 60: Turbocompound-System
- 62: Abgaskrümmer
- 64: Leitung zum Schalldämpfer
- 66: Abgas
- 68: Ansaugluft
- 70: Kupplung für 2-stufigen Abgasturbolader-Betrieb

- TE: Turbineneintritt
- TA: Turbinenaustritt
- VE: Verdichtereintritt
- VA: Verdichteraustritt

## Patentansprüche

1. Verbrennungskraftmaschine (10) mit einem Turbocompound-System (60), welches einen Abgasturbolader (14), einen Ladeluftkühler (24) sowie eine Nutzturbine (42) enthält, die über ein Getriebe (50) mit Kupplung (52) mit der Kurbelwelle (58) der Verbrennungskraftmaschine (10) verbindbar ist, **dadurch gekennzeichnet, dass** ein zusätzlicher, zuschaltbarer Verdichter (40) vorgesehen ist, der bei Zuschaltung wahlweise entweder mit der Nutzturbine (42) oder mit der Verbrennungskraftmaschine (10) oder mit der Nutzturbine und der Verbrennungskraftmaschine (10) kuppelbar ist.

2. Verbrennungskraftmaschine gemäß Anspruch 1, **dadurch gekennzeichnet, dass** ein Ansaugrohr (28) mindestens eine erste Luftstrecke (30) und eine zweite Luftstrecke (32) umfasst.

3. Verbrennungskraftmaschine gemäß Anspruch 2, **dadurch gekennzeichnet, dass** eine der Luftstrecken (30, 32) am zuschaltbaren Verdichter (40) mündet und die mindestens eine weitere Luftstrecke (30, 32) zur Umgehung des zusätzlichen, zuschaltbaren Verdichters (40) ein Rückschlagventil (34) umfasst.

4. Verbrennungskraftmaschine gemäß Anspruch 1, **dadurch gekennzeichnet, dass** die Nutzturbine (42) und der zuschaltbare Verdichter (40) über eine Antriebswelle (46) miteinander koppelbar sind, die eine regelbare Kupplung (44) sowie eine Kupplung (48) mit Freilauf enthält.

5. Verbrennungskraftmaschine gemäß Anspruch 4, **dadurch gekennzeichnet, dass** die regelbare Kupplung (44) auf der Antriebswelle (46) zwischen dem zuschaltbaren Verdichter (40) und einer Einkopplungsstelle eines Drehmoments des Getriebes (50) angeordnet ist.

6. Verbrennungskraftmaschine gemäß Anspruch 4, **dadurch gekennzeichnet, dass** die Kupplung (48) mit Freilauf auf der Antriebswelle (46) zwischen der Nutzturbine (42) und einer Einkopplungsstelle eines Drehmoments des Getriebes (50) angeordnet ist.

7. Verbrennungskraftmaschine gemäß Anspruch 4, **dadurch gekennzeichnet, dass** die regelbare Kupplung (44) als hydraulisch befüllbare und hydraulisch entleerbare Kupplung ausgeführt ist.

8. Verbrennungskraftmaschine gemäß Anspruch 4, **dadurch gekennzeichnet, dass** die regelbare Kupplung (44) mit einer fliehkraftabhängigen Vorrichtung zum Ölablass zur Drehzahlbegrenzung ausgestattet ist.

9. Verbrennungskraftmaschine gemäß Anspruch 1, **dadurch gekennzeichnet, dass** das Getriebe (50) als mindestens einstufiges Reduktionsgetriebe ausgeführt ist, welches eine Dämpfungskupplung (52) und einen sperr- oder freigebbaren Freilauf (54) umfasst.

10. Verbrennungskraftmaschine gemäß Anspruch 9, **dadurch gekennzeichnet, dass** in einem Reduktionssatz des Getriebes (59) eine Kupplung (70) angeordnet ist, welche bei geschlossener regelbarer Kupplung (44) einen trägheitsmomentarmen Betrieb der Abgasturbolader (14; 40, 42) ermöglicht.

11. Verbrennungskraftmaschine gemäß Anspruch 3, **dadurch gekennzeichnet, dass** das Rückschlagventil (34) in einer ersten Stellung (36) die Mündung einer der Luftstrecken (30, 32) in die Ansaugluftleitung (22) verschließt.

12. Verfahren zum Betreiben einer Verbrennungskraftmaschine (10) gemäß einem der vorhergehenden Ansprüche, wobei die Verbrennungskraftmaschine (10) ein Turbocompound-System (60) sowie einen zuschaltbaren, zusätzlichen Verdichter umfasst, **dadurch gekennzeichnet, dass** die Verbrennungskraftmaschine (10) im reinen Turbocompound-Betriebsmodus, im Betriebsmodus "zweistufige Aufladung", im Betriebsmodus "zweistufige Aufladung mit Turbocompound-Unterstützung", im Betriebsmodus "Motorbremse" und im Betriebsmodus "Förderung Zusatzluftmenge" betrieben wird.

13. Verfahren zum Betreiben einer Verbrennungskraftmaschine (10) gemäß Anspruch 12, **dadurch gekennzeichnet, dass** im Turbocompound-Betriebsmodus bei geöffneter regelbarer Kupplung (44) der Antriebswelle (46) die Nutzleistung der Lutzturbine (42) bei geschlossener Kupplung (48) mit Freilauf über das Getriebe (50) an die Kurbelwelle (58) der Verbrennungskraftmaschine (10) übertragen wird.

14. Verfahren zum Betreiben einer Verbrennungskraftmaschine (10) gemäß Anspruch 12, **dadurch gekennzeichnet, dass** im Betriebsmodus "Zusatzluflförderung" der zusätzliche Verdichter (40) von der Verbrennungskraftmaschine (10) angetrieben wird und Zusatzluft fördert.

15. Verfahren zum Betreiben einer Verbrennungskraftmaschine (10) gemäß Anspruch 14, **dadurch gekennzeichnet, dass** die Dämpfungskupplung (52) und der Freilauf (54) des Getriebes (50) geschlossen sind.

16. Verfahren zum Betreiben einer Verbrennungskraftmaschine (10) gemäß Anspruch 14, **dadurch gekennzeichnet, dass** die regelbare Kupplung (44) der Antriebswelle (46) geschlossen ist.

17. Verfahren zum Betreiben einer Verbrennungskraftmaschine (10) gemäß Anspruch 14, **dadurch gekennzeichnet, dass** das Rückschlagventil (34) in seine erste Stellung (36) gestellt ist und das Entweichen von vorverdichteter Ansaugluft (68) des zuschaltbaren Verdichters (40) verhindert.

18. Verfahren zum Betreiben einer Verbrennungskraftmaschine (10) gemäß Anspruch 14, **dadurch gekennzeichnet, dass** die Nutzturbine (42) durch Öffnung der Kupplung (48) mit Freilauf von dem zusätzlichen, zuschaltbaren Verdichter (40) getrennt ist.

19. Verfahren zum Betreiben einer Verbrennungskraftmaschine gemäß Anspruch 14, **dadurch gekennzeichnet, dass** die Drehzahl des zusätzlichen Verdichters (40) durch die regelbare Kupplung (44) mit einer fliehkraftbetätigten Vorrichtung zum Ölablass variierbar ist.

20. Verfahren zum Betreiben einer Verbrennungskraftmaschine (10) gemäß Anspruch 12, **dadurch gekennzeichnet, dass** im Betriebsmodus "zweistufige Aufladung" die Nutzturbine (42) über die Antriebswelle (46) mit dem zuschaltbaren, zusätzlichen Verdichter (40) bei geschlossener regelbarer Kupplung (44) und geschlossener Kupplung (48) mit Freilauf verbunden sind und die Dämpfungskupplung (52) oder der Freilauf (54) des Getriebes (50) geöffnet stehen.

21. Verfahren zum Betreiben einer Verbrennungskraftmaschine (10) gemäß Anspruch 12, **dadurch gekennzeichnet, dass** im Betriebsmodus "Motorbremse" der zusätzliche, zuschaltbare Verdichter (40) über das Getriebe (50) von der Verbrennungskraftmaschine (10) angetrieben ist.

22. Verfahren zum Betreiben einer Verbrennungskraftmaschine (10) gemäß Anspruch 21, **dadurch gekennzeichnet, dass** die Nutzturbine (42) von dem zusätzlichen, zuschaltbaren Verdichter (40) getrennt ist.

23. Verfahren zum Betreiben einer Verbrennungskraftmaschine (10) gemäß Anspruch 12, **dadurch gekennzeichnet, dass** die Abtriebsleistung der Nutzturbine (42) sowohl der Kurbelwelle (58) der Verbrennungskraftmaschine zugeführt wird als auch zur Verdichtung von Ansaugluft (68) genutzt wird.

## Claims

1. Internal combustion engine (10) having a turbocompound system (60) which comprises an exhaust-gas turbocharger (14), a charge-air cooler (24) and a power turbine (42) which can be connected to the crankshaft (58) of the internal combustion engine (10) via a gearing (50) with a clutch (52), **characterized in that** an additional, switchable compressor (40) is provided which, when switched, can be coupled selectively either to the power turbine (42) or to the internal combustion engine (10) or to the power turbine and the internal combustion engine (10).

2. Internal combustion engine according to Claim 1, **characterized in that** an intake pipe (28) comprises at least one first air path (30) and one second air path (32).

3. Internal combustion engine according to Claim 2, **characterized in that** one of the air paths (30, 32) opens out at the switchable compressor (40) and the at least one further air path (30, 32) comprises a check valve (34) for bypassing the additional, switchable compressor (40).

4. Internal combustion engine according to Claim 1, **characterized in that** the power turbine (42) and the switchable compressor (40) can be coupled to one another by means of a drive shaft (46) which comprises a controllable clutch (44) and a clutch (48) with a freewheel.

5. Internal combustion engine according to Claim 4, **characterized in that** the controllable clutch (44) is arranged on the drive shaft (46) between the switchable compressor (40) and a coupling-in point of a torque of the gearing (50).

6. Internal combustion engine according to Claim 4, **characterized in that** the clutch (48) with a freewheel is arranged on the drive shaft (46) between the power turbine (42) and a coupling-in point of a torque of the gearing (50).

7. Internal combustion engine according to Claim 4, **characterized in that** the controllable clutch (44) is designed as a clutch which can be hydraulically filled and hydraulically emptied.

8. Internal combustion engine according to Claim 4, **characterized in that** the controllable clutch (44) is equipped with a centrifugal-force-dependent device for oil discharge for rotational speed limitation.

9. Internal combustion engine according to Claim 1, **characterized in that** the gearing (50) is designed as an at least single-stage reduction gearing which comprises a damping clutch (52) and a lockable or releasable freewheel (54).

10. Internal combustion engine according to Claim 9, **characterized in that** a clutch (70) is arranged in a reduction set of the gearing (50), which clutch (70), when the controllable clutch (44) is closed, permits operation of the exhaust-gas turbocharger (14; 40, 42) with a low moment of inertia.

11. Internal combustion engine according to Claim 3, **characterized in that** the check valve (34), in a first position (36), closes off the opening of one of the air paths (30, 32) into the intake air line (22).

12. Method for operating an internal combustion engine (10) according to one of the preceding claims, with the internal combustion engine (10) comprising a turbocompound system (60) and a switchable, additional compressor, **characterized in that** the internal combustion engine (10) is operated in the purely turbocompound operating mode, in the "two-stage supercharging" operating mode, in the "two-stage supercharging with turbocompound assistance" operating mode, in the "engine braking" operating mode and in the "feed additional air quantity" operating mode.

13. Method for operating an internal combustion engine (10) according to Claim 12, **characterized in that**, in the turbocompound operating mode, when the controllable clutch (44) of the drive shaft (46) is open, the power output of the power turbine (42) is transmitted via the gearing (50) to the crankshaft (58) of the internal combustion engine (10) when the clutch (48) with a freewheel is closed.

14. Method for operating an internal combustion engine (10) according to Claim 12, **characterized in that**, in the "additional air feed" operating mode, the additional compressor (40) is driven by the internal combustion engine (10) and additional air is fed.

15. Method for operating an internal combustion engine (10) according to Claim 14, **characterized in that** the damping clutch (52) and the freewheel (54) of the gearing (50) are closed.

16. Method for operating an internal combustion engine (10) according to Claim 14, **characterized in that** the controllable clutch (44) of the drive shaft (46) is closed.

17. Method for operating an internal combustion engine (10) according to Claim 14, **characterized in that** the check valve (34) is set into its first position (36) and prevents the escape of precompressed intake air (68) of the switchable compressor (40).

18. Method for operating an internal combustion engine (10) according to Claim 14, **characterized in that** the power turbine (42) is separated from the additional, switchable compressor (40) by opening the clutch (48) with a freewheel.

19. Method for operating an internal combustion engine according to Claim 14, **characterized in that** the rotational speed of the additional compressor (40) can be varied by means of the controllable clutch (44) with a centrifugal-force-actuated device for oil discharge.

20. Method for operating an internal combustion engine (10) according to Claim 12, **characterized in that** in the "two-stage supercharging" operating mode, the power turbine (42) is connected via the drive shaft (46) to the switchable, additional compressor (40) when the controllable clutch (44) is closed and the clutch (48) with a freewheel is closed and the damping clutch (52) or the freewheel (54) of the gearing (50) is open.

21. Method for operating an internal combustion engine (10) according to Claim 12, **characterized in that**, in the "engine braking" operating mode, the additional, switchable compressor (40) is driven by the internal combustion engine (10) via the gearing (50).

22. Method for operating an internal combustion engine (10) according to Claim 21, **characterized in that** the power turbine (42) is separated from the additional, switchable compressor (40).

23. Method for operating an internal combustion engine (10) according to Claim 12, **characterized in that** the drive output power of the power turbine (42) is both supplied to the crankshaft (58) of the internal combustion engine and also utilized for compressing intake air (68).

## Revendications

1. Moteur à combustion interne (10) comprenant un système à turbocompound (60), qui contient un turbocompresseur à gaz d'échappement (14), un refroidisseur d'air de charge (24) ainsi qu'une turbine de puissance (42), qui peut être reliée par le biais d'une transmission (50) à embrayage (52) au vilebrequin (58) du moteur à combustion interne (10), **caractérisé en ce qu'**un compresseur supplémentaire raccordable (40) est prévu, lequel peut être accouplé, lorsqu'il est raccordé, de manière sélective soit à la turbine de puissance (42) ou au moteur à combustion interne (10), soit à la turbine de puissance et au moteur à combustion interne (10).

2. Moteur à combustion interne selon la revendication 1, **caractérisé en ce qu'**un tube d'admission (28) comprend au moins une première section d'air (30) et une deuxième section d'air (32).

3. Moteur à combustion interne selon la revendication 2, **caractérisé en ce que** l'une des sections d'air (30, 32) débouche au niveau du compresseur raccordable (40) et l'au moins une autre section d'air (30, 32) comprend une soupape de non retour (34) pour contourner le compresseur supplémentaire raccordable (40).

4. Moteur à combustion interne selon la revendication 1, **caractérisé en ce que** la turbine de puissance (42) et le compresseur raccordable (40) peuvent être accouplés l'un à l'autre par le biais d'un arbre d'entraînement (46), qui contient un embrayage réglable (44) ainsi qu'un embrayage (48) à roue libre.

5. Moteur à combustion interne selon la revendication 4, **caractérisé en ce que** l'embrayage réglable (44) est disposé sur l'arbre d'entraînement (46) entre le compresseur raccordable (40) et un point d'introduction d'un couple de la transmission (50).

6. Moteur à combustion interne selon la revendication 4, **caractérisé en ce que** l'embrayage (48) à roue libre est disposé sur l'arbre d'entraînement (46) entre la turbine de puissance (42) et un point d'introduction d'un couple de la transmission (50).

7. Moteur à combustion interne selon la revendication 4, **caractérisé en ce que** l'embrayage réglable (44) est réalisé sous forme d'embrayage pouvant être rempli et vidé de manière hydraulique.

8. Moteur à combustion interne selon la revendication 4, **caractérisé en ce que** l'embrayage réglable (44) est muni d'un dispositif dépendant de la force centrifuge pour l'évacuation d'huile en vue de limiter le couple.

9. Moteur à combustion interne selon la revendication 1, **caractérisé en ce que** la transmission (50) est réalisée sous forme d'au moins un réducteur à un étage qui comprend un embrayage d'amortissement (52) et une roue libre (54) pouvant être bloquée ou libérée.

10. Moteur à combustion interne selon la revendication 9, **caractérisé en ce que** dans un jeu de réduction de la transmission (59) est disposé un embrayage (70) qui, lorsque l'embrayage réglable (44) est fermé, permet un fonctionnement à faible couple d'inertie du turbocompresseur à gaz d'échappement (14 ; 40 ; 42).

11. Moteur à combustion interne selon la revendication 3, **caractérisé en ce que** la soupape de non retour (34), dans une première position (36), ferme l'entrée d'une des sections d'air (30, 32) dans la conduite d'air d'admission (22).

12. Procédé pour faire fonctionner un moteur à combustion interne (10) selon l'une quelconque des revendications précédentes, dans lequel le moteur à combustion interne (10) comprend un système à turbocompound (60) ainsi qu'un compresseur raccordable supplémentaire, **caractérisé en ce que** le moteur à combustion interne (10) fonctionne en mode de fonctionnement purement turbocompound, en mode de fonctionnement "suralimentation à deux étages", en mode de fonctionnement "suralimentation à deux étages avec assistance par turbocompound", en mode de fonctionnement "frein moteur" et en mode de fonctionnement "refoulement de la quantité d'air supplémentaire".

13. Procédé pour faire fonctionner un moteur à combustion interne (10) selon la revendication 12, **caractérisé en ce que** dans le mode de fonctionnement turbocompound, lorsque l'embrayage réglable (44) de l'arbre d'entraînement (46) est ouvert, la puissance utile de la turbine de puissance (42), lorsque l'embrayage (48) à roue libre est fermé, est transmise par le biais de la transmission (50) au vilebrequin (58) du moteur à combustion interne (10).

14. Procédé pour faire fonctionner un moteur à combustion interne (10) selon la revendication 12, **caractérisé en ce que** dans le mode de fonctionnement "refoulement de la quantité d'air supplémentaire", le compresseur supplémentaire (40) est entraîné par le moteur à combustion interne (10) et refoule de l'air supplémentaire.

15. Procédé pour faire fonctionner un moteur à combustion interne (10) selon la revendication 14, **caractérisé en ce que** l'embrayage d'amortissement (52) et la roue libre (54) de la transmission (50) sont fermés.

16. Procédé pour faire fonctionner un moteur à combustion interne (10) selon la revendication 14, **caractérisé en ce que** l'embrayage réglable (44) de l'arbre d'entraînement (46) est fermé.

17. Procédé pour faire fonctionner un moteur à combustion interne (10) selon la revendication 14, **caractérisé en ce que** la soupape de non retour (34) est réglée dans sa première position (36) et empêche la détente de l'air d'admission précomprimé (68) du compresseur raccordable (40).

18. Procédé pour faire fonctionner un moteur à combustion interne (10) selon la revendication 14, **caractérisé en ce que** la turbine de puissance (42) est séparée du compresseur supplémentaire raccordable (40) par l'ouverture de l'embrayage (48) à roue libre.

19. Procédé pour faire fonctionner un moteur à combustion interne selon la revendication 14, **caractérisé en ce que** le régime du compresseur supplémentaire (40) peut être varié par l'embrayage réglable (44) avec un dispositif d'évacuation d'huile activé par la force centrifuge.

20. Procédé pour faire fonctionner un moteur à combustion interne (10) selon la revendication 12, **caractérisé en ce que** dans le mode de fonctionnement "suralimentation à deux étages", la turbine de puissance (42) est connectée par le biais de l'arbre d'entraînement (46) au compresseur supplémentaire raccordable (40) lorsque l'embrayage réglable (44) est fermé et que l'embrayage (48) à roue libre est fermé, et l'embrayage d'amortissement (52) ou la roue libre (54) de la transmission (50) est ouvert.

21. Procédé pour faire fonctionner un moteur à combustion interne (10) selon la revendication 12, **caractérisé en ce que** dans le mode de fonctionnement "frein moteur", le compresseur supplémentaire raccordable (40) est entraîné par le biais de la transmission (50) par le moteur à combustion interne (10).

22. Procédé pour faire fonctionner un moteur à combustion interne (10) selon la revendication 21, **caractérisé en ce que** la turbine de puissance (42) est séparée du compresseur supplémentaire raccordable (40).

23. Procédé pour faire fonctionner un moteur à combustion interne (10) selon la revendication 12, **caractérisé en ce que** la puissance de sortie de la turbine de puissance (42) est acheminée au vilebrequin (58) du moteur à combustion interne et est utilisée pour le compresseur de l'air d'admission (68).
